(19) Europäisches Patentamt
European Patent Office
Office européen des brevets

(11) Veröffentlichungsnummer: **0 061 728**
**B1**

(12) # EUROPÄISCHE PATENTSCHRIFT

(45) Veröffentlichungstag der Patentschrift: **27.12.84**

(51) Int. Cl.³: **C 09 B 29/33,** C 09 B 67/48 // C08K5/23

(21) Anmeldenummer: **82102501.2**

(22) Anmeldetag: **25.03.82**

(54) **Monoazoverbindung, Verfahren zu ihrer Herstellung und ihre Verwendung.**

(30) Priorität: **31.03.81 DE 3112692**

(43) Veröffentlichungstag der Anmeldung: **06.10.82 Patentblatt 82/40**

(45) Bekanntmachung des Hinweises auf die Patenterteilung: **27.12.84 Patentblatt 84/52**

(84) Benannte Vertragsstaaten: **BE CH DE FR GB IT LI**

(56) Entgegenhaltungen:
**EP - A - 0 029 558**
**DE - A - 1 808 015**
**DE - A - 1 808 017**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Fuchs, Otto, Dr., Dr.-Model-Strasse 2, D-8221 Grabenstätt (DE)**

EP 0 061 728 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Monoazoverbindung der Formel I

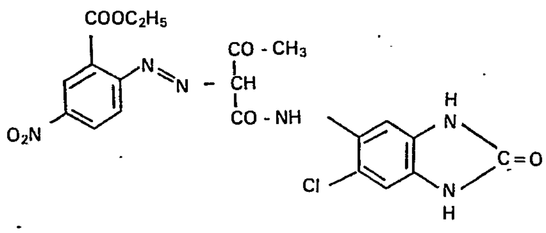

(I)

ein Verfahren zu ihrer Herstellung, das dadurch gekennzeichnet ist, dass man die Verbindung der Formel II

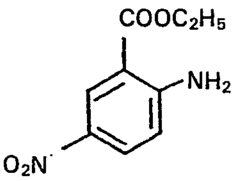

(II),

diazotiert und die erhaltene Diazoniumverbindung mit der Verbindung der Formel III

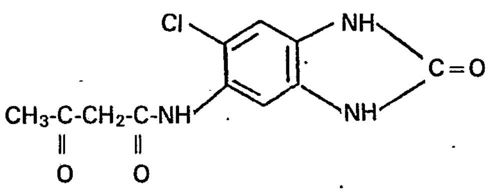

(III)

kuppelt, sowie ihre Verwendung als Pigment, insbesondere zum Pigmentieren von Lacken und plastischen Massen.

Es wurden bereits Monoazoverbindungen aus diazotierten 4-Amino-2-nitrobenzoesäure-alkylestern mit Alkylresten von 1 bis 4 C-Atomen und 5-Acetoacetylamino-benzimidazolonen vorgeschlagen (am 3.6.81 veröffentlichte Europäische Patentanmeldung 0 029 558).

Die erfindungsgemässe Verbindung existiert in mehreren Modifikationen, darunter eine gelbe und eine stabile orangefarbene Kristallmodifikation.

Die gelbe Kristallmodifikation weist in ihrem Röntgenbeugungsdiagramm mittels Cu-K$\alpha$-Strahlen bei einem Glanzwinkel von 5,20° $\vartheta$ einen Reflex hoher Intensität, bei Glanzwinkeln von 6,45°, 7,80°, 8,40°, 8,90°, 10,45°, 12,70° und 13,35° $\vartheta$ Reflexe mittlerer Intensität und bei Glanzwinkeln von 4,20°, 8,10°, 11,45°, 12,00°, 13,60° und 14,40 $\vartheta$ Reflexe geringer Intensität auf.

Die orangefarbene Kristallmodifikation der Verbindung der Formel I weist in ihrem Röntgenbeugungsdiagramm mittels Cu-K$\alpha$-Strahlen bei Glanzwinkeln von 5,05° und 12,95° $\vartheta$ Reflexe hoher Intensität, bei Glanzwinkeln von 3,55°, 5,60°, 8,00°, 10,05°, 10,40°, 11,35° und 14,20° $\vartheta$ Reflexe mittlerer Intensität und bei Glanzwinkeln von 2,25°, 9,10°, 11,95°, 13,65° und 16,10° $\vartheta$ Reflexe geringer Intensität auf.

Die Erfindung betrifft weiterhin Verfahren zur Herstellung der beiden reinen Kristallmodifikationen. Es wurde gefunden, dass man die gelbe Modifikation erhalten kann, wenn man die Diazoniumverbindung der Base der Formel II auf die Kupplungskomponente der Formel III unter Einhaltung eines pH-Wertes von 5,5 bis 7,0, vorzugsweise zwischen 6,0 und 6,5, und Temperaturen von 20 bis 50°C, vorzugsweise 30 bis 35°C, kuppelt. Unter Einhaltung dieser Bedingungen kann man nach abgeschlossener Kupplung und kurzer Nachrührzeit ein sehr instabiles, orangefarbenes Pigment isolieren, welches das gleiche Röntgenbeugungsdiagramm aufweist, das eingangs für die orangefarbene stabile Modifikation angegeben ist. Dieses orangefarbene instabile Rohpigment lässt sich nun in Form seines wässrigen Presskuchens in die reine gelbe Modifikation verwandeln, wenn man den Presskuchen mit einem Alkohol mit 1 bis 6 C-Atomen oder dessen Gemisch mit Wasser auf 65 bis 130°C, vorzugsweise 80 bis 125°C erhitzt.

Das nach Aufarbeitung des Ansatzes isolierte und getrocknete Pigment weist nun das Röntgenbeugungsdiagramm auf, wie es oben für die gelbe Modifikation angegeben ist.

Als Alkohole kommen beispielsweise in Frage:

Methanol, Ethanol, Propanol, Butanol, Isopropanol, Isobutanol und andere gut regenerierbare Alkohole. In einer besonders bevorzugten Ausführungsform wird der feuchte Presskuchen mit einem Isobutanol/Wasser-Gemisch auf 125°C erhitzt, anschliessend das Isobutanol azeotrop mit Wasserdampf übergetrieben und nach Abtrennung vom Wasser für einen weiteren Ansatz verwendet.

Es gelingt ferner, die gelbe Modifikation in reiner Form herzustellen, wenn man die Kupplung in Anwesenheit bestimmter oberflächenaktiver Substanzen vornimmt. Es wurde gefunden, dass sich hierfür die Kondensationsprodukte aus einem aliphatischen Alkohol mit 8 bis 24, vorzugsweise 8 bis 16 C-Atomen mit 2 bis 20, vorzugsweise 2 bis 10 Mol Ethylenoxid oder tertiäre Ester aus o-Phosphorsäure und einem Alkohol $R\text{-}[O\text{-}CH_2\text{-}CH_2\text{-}]_n\text{-}OH$, wobei R ein aliphatischer Kohlenwasserstoffrest mit 8 bis 24, vorzugsweise 8 bis 16 C-Atomen und n eine Zahl von 1 bis 20, vorzugsweise 1 bis 10 bedeuten, eignen. In Anwesenheit dieser Mittel, insbesondere der Kondensationsprodukte von Isotridecanol mit Ethylenoxid und des tertiären Esters aus o-Phosphorsäure und Lauryldiglykolether ist es nicht notwendig, die pH-Bedingungen und die Temperatur in den gleichen engen Grenzen zu halten, wie eingangs beschrieben. Man führt die Kupplung bei einem pH-Wert der Kupelsuspension von 3,5 bis 7,0 und Temperaturen von 25 bis 70°C durch. Hierbei wird direkt die gelbe Modifikation erhalten und es bedarf keiner Phasenumwandlung. Es empfiehlt sich jedoch, das Rohpigment entweder in Suspension oder nach vorheriger Isolierung einige Zeit, eventuell unter Zusatz von Alkoholen mit 1 bis 6 C-Atomen oder deren Gemischen mit Wasser, auf Temperaturen von 70 bis 140°C zu erhitzen, um eine Verbesserung der Kristallgüte und eine Änderung der Deckkraft zu bewerkstelligen. Als Alkohole kommen z.B. in Frage: Methanol, Ethanol, Propanol, Butanol, Isopropanol und andere gut regenerierbare Alkohole, insbesondere Isobutanol.

Es wurde weiterhin gefunden, dass die stabile orangefarbene Modifikation erhalten wird, wenn

man die oben genannte Kupplung bei einem pH-Wert von 3,5 bis 5,3, vorzugsweise 4,0 bis 5,0, bei Temperaturen von 30 bis 70°C, vorzugsweise 40 bis 60°C, vornimmt. Unter Einhaltung dieser Bedingungen erhält man zunächst ein Gemisch der orangefarbenen und gelben Modifikation, jedoch mit nur ganz geringen Anteilen an gelber. Nach Erhitzen dieses Gemisches ohne Zwischenisolierung des Pigments unter Zusatz organischer Lösemittel oder Gemischen organischer Lösemittel mit Wasser auf Temperaturen von 80 bis 180°C, vorzugsweise 90 bis 150°C, erhält man die reine orangefarbene Modifikation mit dem eingangs angegebenen Röntgenbeugungsdiagramm. Als organische Lösemittel eignen sich beispielsweise Alkohole oder Ketone mit jeweils bis zu 6 C-Atomen, Glykolether mit bis zu 10 C-Atomen, gegebenenfalls halogensubstituierte Benzole oder Alkylbenzole oder dipolar aprotische Lösemittel, wie Dimethylformamid, N-Methylpyrrolidon oder Dimethylacetamid. Man kann die Umwandlung selbstverständlich auch mit dem isolierten und eventuell getrockneten Rohpigment in An- oder Abwesenheit von Wasser vornehmen. Als organische Lösemittel für die Umwandlung kommen die vorstehend genannten, insbesondere aber Isobutanol in Frage.

Eine weitere Möglichkeit zur Herstellung der orangefarbenen Modifikation besteht darin, dass man die gelbe Modifikation oder ein Gemisch der gelben und orangefarbenen Modifikation mit hohen Anteilen an gelber Modifikation trocken oder in Wasser, den obengenannten Lösemitteln oder deren Gemischen mit Wasser suspendiert und auf Temperaturen von 80 bis 180°C, vorzugsweise 90 bis 150°C, erhitzt.

Sowohl die gelbe als auch die orangefarbene Modifikation stellen wertvolle Pigmente dar, die sich praktisch für alle Pigmentanwendungsgebiete einsetzen lassen. So eignen sie sich hervorragend zum Pigmentieren von Einbrennlacken, in denen sie neben ausgezeichneter Licht- und Wetterechtheit eine einwandfreie Überlackierechtheit und eine gute Thermostabilität auch bei hohen Einbrenntemperaturen aufweisen, aber auch zum Pigmentieren plastischer Massen, in denen sich das Pigment durch gute Migrationsechtheit und eine hohe Lichtechtheit auszeichnet.

In den folgenden Beispielen beziehen sich Prozentangaben auf das Gewicht, wenn nichts anderes angegeben ist.

*Beispiel 1* (Gelbe Modifikation)

21,2 g 5-Nitro-2-amino-benzoesäureethylester werden in 60 ml Eisessig und 35 ml 30%iger Salzsäure verrührt und nach Überführung in das Hydrochlorid bei 10 bis 15°C mit Natriumnitritlösung diazotiert. 26,8 g 5-Chlor-6-acetoacetylaminobenzimidazolon-(2) werden in 800 ml Wasser eingetragen und durch Zugabe von 18 ml 33%iger Natronlauge gelöst. In diese Lösung lässt man bei 20 bis 30°C eine Mischung von 12 ml Eisessig und 200 ml Wasser zulaufen. In die erhaltene Suspension lässt man bei 30°C unter gleichzeitiger Zugabe von 3%iger Natronlauge in der Weise, dass während der gesamten Kupplung ein pH-Wert von 6,0 bis 6,5 aufrechterhalten wird, die geklärte Diazoniumsalzlösung innerhalb von 1 bis 2 Stunden zutropfen. Nach beendeter Kupplung wird der Ansatz 30 Minuten auf 50°C erhitzt, das gebildete orangefarbene Rohpigment abfiltriert und mit warmem Wasser gewaschen.

Der feuchte Presskuchen wird in einer Mischung von 200 ml Isobutanol und 800 ml Wasser angeschlämmt und in einem Druckgefäss unter Rühren 3 Stunden auf 125°C erhitzt. nach Abkühlen unter den Siedepunkt wird das Isobutanol mit Wasserdampf abdestilliert, das Pigment abfiltriert, mit heissem Wasser gewaschen, getrocknet und gemahlen. Man erhält 46,8 g eines gelben mikrokristallinen Pigmentpulvers, welches das eingangs angegebene Röntgenbeugungsdiagramm für die gelbe Modifikation aufweist.

Das Pigment eignet sich hervorragend zum Pigmentieren von Einbrennlacken, mit denen rotstichiggelbe Lackierungen von einwandfreier Überlackierechtheit und guter Licht- und Wetterechtheit erhalten werden. Verwendet man anstelle von Isobutanol einen anderen niedrigsiedenden Alkohol wie Methanol, Ethanol, Propanol, Isopropanol, Butanol und ähnliche, so erhält man vergleichbare Ergebnisse.

*Beispiel 2* (Gelbe Modifikation)

31,8 g 5-Nitro-2-amino-benzoesäureethylester werden in 90 ml Eisessig und 51,5 ml 30%iger Salzsäure verrührt und anschliessend bei 10 bis 15°C mit Natriumnitritlösung bei 19 bis 15°C diazotiert, die Diazoniumsalzlösung mit 90 ml Wasser verdünnt und geklärt. 40,2 g 5-Chlor-6-acetoacetylamino--benzimidazolon-(2) werden in 800 ml Wasser eingetragen und mit 27,0 ml 33%iger Natronlauge gelöst. Der Lösung setzt man 4,5 g eines tertiären Esters aus o-Phosphorsäure und Lauryldiglykolether zu und fällt die Kupplungskomponente bei 10°C durch Zugabe von 18 ml Eisessig aus. In diese Suspension lässt man bei 50°C unter gleichzeitiger Zugabe von 3%iger Natronlauge in der Weise, dass während der gesamten Kupplung ein pH-Wert von 4 bis 5 eingehalten wird, die Diazoniumsalzlösung innerhalb von 2 Stunden zutropfen. Der Ansatz wird anschliessend 30 Minuten auf 80°C erhitzt, das gebildete gelbe Pigment abfiltriert, mit heissem Wasser gewaschen, getrocknet und gemahlen. Das in einer Ausbeute von 72,3 g erhaltene gelbe Pigment zeigt das eingangs beschriebene Röntgenbeugungsdiagramm für die gelbe Modifikation. Erhitzt man den Ansatz zum Sieden oder auch in einem Druckgefäss, eventuell unter Zusatz eines Alkohols wie Isobutanol, auf Temperaturen oberhalb des Siedepunkts (etwa 130 bis 140°C), so erhält man ein ganz ähnliches Pigment, bei dem die kristalline Beschaffenheit verbessert ist, was sich in einer Erhöhung der Deckkraft sowie in einer Erniedrigung der Viskosität eines damit hergestellten Lackes äussert. Die Nachbehandlung des Pigmentes durch Erhitzen unter Druck kann auch nach vorheriger Isolierung des Pigmentes aus der Kuppelsuspension erfolgen. Setzt man anstelle der oben angegebenen oberflächenaktiven Substanz die gleiche Menge des Kondensationsproduktes von Isotridecanol mit 6 Mol Ethylenoxid zu, so erhält man ebenfalls die gelbe Modifikation.

*Beispiel 3* (Orangefarbene Modifikation)

Aus 31,8 g 5-Nitro-2-amino-benzoesäureethylester wird, wie in Beispiel 2 beschrieben, die Diazoniumsalzlösung hergestellt. 40,2 g 5-Chlor-6-acetoacetylamino-benzimidazolon-(2) werden in 800 ml Wasser mit 27,0 ml 33%iger Natronlauge gelöst. Durch Zugabe von 18,0 ml Eisessig, gelöst in 600 ml Wasser, wird aus dieser Lösung die Kupplungskomponente bei etwa 20°C ausgefällt.

In die so erhaltene Suspension lässt man bei 50°C unter gleichzeitiger Zugabe von 3%iger Natronlauge in der Weise, dass während der gesamten Kupplung ein pH-Wert von 4,0 bis 5,0 aufrecht erhalten wird, die Diazoniumsalzlösung innerhalb von zwei Stunden zutropfen. Danach wird der Ansatz durch Einleiten von Wasserdampf zwei Stunden auf 80°C geheizt. Das gebildete orangefarbene Pigment wird aus der heissen Suspension abfiltriert und mit heissem Wasser neutral gewaschen. Das Röntgenbeugungsdiagramm einer getrockneten und gemahlenen Probe des orangefarbenen Presskuchens zeigt, dass es sich um ein Gemisch der gelben und orangefarbenen Modifikation handelt, mit überwiegendem Anteil der letzteren. Erhitzt man nun den feuchten Presskuchen des nach der oben angegebenen Arbeitsweise erhaltenen Gemisches unter Zusatz von 500 g Isobutanol und 500 g Wasser 3 Stunden in einem geschlossenen Rührgefäss auf 100 bis 110°C, so erhält man nach Isolieren, Neutralwaschen und Trocknen 72,5 g eines orangefarbenen Kristallpulvers. Dieses weist im Röntgenbeugungsdiagramm ausschliesslich die Reflexe auf, wie sie eingangs für die orangefarbene Modifikation aufgeführt sind.

Die orangefarbene Modifikation liefert, in einem Einbrennlack verarbeit, klare orangefarbene Lackierungen mit ausgezeichneter Licht- und Wetterechtheit sowie einwandfreier Überlackierechtheit. Durch Einwalzen des Pigments in Polyvinylchlorid lassen sich orangefarbene Folien herstellen, in denen das Pigment neben guter Migrationsechtheit eine hohe Lichtechtheit aufweist.

Die Überführung des Gemisches der beiden Modifikationen in die reine orangefarbene Modifikation kann auch in der Weise vorgenommen werden, dass man ohne Zwischenisolierung des Gemischs den Ansatz nach Neutralstellen unter Druck auf 120 bis 150°C erhitzt. Die Zugabe von 200 bis 800 g eines Alkohols, beispielsweise Isobutanol, liefert nach Aufarbeitung des Ansatzes ein Pigment, das eine höhere Deckkraft aufweist.

*Beispiel 4* (Orangefarbene Modifikation)

Der nach Angaben des Beispiels 1 oder 2 erhaltene feuchte Presskuchen der gelben Modifikation wird in einem Druckgefäss mit 500 g Isobutanol und 500 g Wasser 3 Stunden auf 140 bis 160°C erhitzt. Nach Abkühlen destilliert man das Isobutanol ab, isoliert das Pigment, wäscht es mit heissem Wasser, trocknet und mahlt es.

Man erhält ein orangefarbenes Kristallpulver, das durch das eingangs für die orangefarbene Modifikation angegebene Röntgenbeugungsdiagramm charakterisiert ist.

**Patentansprüche**

1. Azoverbindung der Formel I

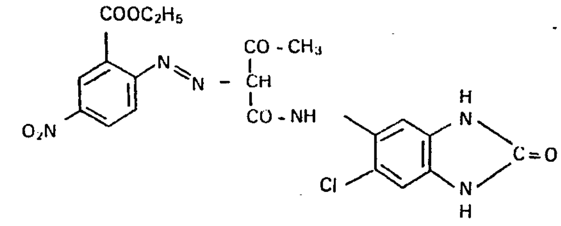

(I)

2. Gelbe Kristallmodifikationen der Verbindung gemäss Anspruch 1, dadurch gekennzeichnet, dass ihr Röntgenbeugungsdiagramm mittels Cu-Kα-Strahlen bei einem Glanzwinkel von 5,20° ϑ einen Reflex hoher Intensität, bei Glanzwinkeln von 6,45°, 7,80°, 8,40°, 8,90°, 10,45°, 12,70° und 13,35° ϑ Reflexe mittlerer Intensität und bei Glanzwinkeln von 4,20°, 8,10°, 11,45°, 12,00°, 13,60° und 14,40 ϑ Reflexe geringer Intensität aufweist.

3. Orangefarbene Kristallmodifikation der Verbindung gemäss Anspruch 1, dadurch gekennzeichnet, dass ihr Röntgenbeugungsdiagramm mittels Cu-Kα-Strahlen bei Glanzwinkeln von 5,05° und 12,95° ϑ Reflexe hoher Intensität, bei Glanzwinkeln von 3,55°, 5,60°, 8,00°, 10,05°, 10,40°, 11,35° und 14,20° ϑ Reflexe mittlerer Intensität und bei Glanzwinkeln von 2,25°, 9,10°, 11,95°, 13,65° und 16,10° ϑ Reflexe geringer Intensität aufweist.

4. Verfahren zur Herstellung der Azoverbindung nach Anspruch 1, dadurch gekennzeichnet, dass man die Verbindung der Formel II

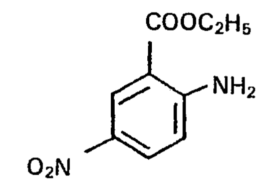

(II)

diazotiert und die erhaltene Diazoniumverbindung mit der Verbindung der Formel III

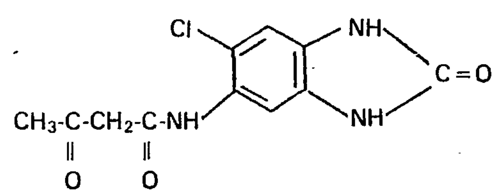

(III)

kuppelt.

5. Verfahren zur Herstellung der gelben Kristallmodifikation nach Anspruch 2 durch Azokupplung gemäss Anspruch 4, dadurch gekennzeichnet, dass man die Kupplung bei einem pH-Wert der Kuppelsuspension von 5,5 bis 7,0 und Temperaturen zwischen 20 und 50°C durchführt, das Rohprodukt zwischenisoliert und unter Zusatz von Alkoholen mit 1 bis 6 C-Atomen oder deren Gemischen mit Wasser auf 65 bis 130°C erhitzt.

6. Verfahren zur Herstellung der gelben Kristallmodifikation nach Anspruch 2 durch Azokupplung gemäss Anspruch 4, dadurch gekennzeichnet, dass man die Kupplung bei einem pH-Wert der Kuppelsuspension von 3,5 bis 7,0 und Temperaturen zwischen 25 und 70°C in Gegenwart eines Kondensationsproduktes aus einem aliphatischen Alkohol mit 8 bis 24 C-Atomen mit 2 bis 20 Mol Ethylenoxid

oder eines tertiären Esters aus o-Phosphorsäure und einem Alkohol $R-[O-CH_2-CH_2-]_n-OH$, wobei R ein aliphatischer Kohlenwasserstoffrest mit 8 bis 24 C-Atomen und n eine Zahl zwischen 1 und 20 bedeuten, durchführt und das so erhaltene Rohprodukt, direkt oder nach Zwischenisolierung, in Wasser oder Gemischen aus Wasser und Alkoholen mit 1 bis 6 C-Atomen auf 65 bis 140°C erhitzt.

7. Verfahren zur Herstellung der orangefarbenen Kristallmodifikation nach Anspruch 3 durch Azokupplung gemäss Anspruch 4, dadurch gekennzeichnet, dass man bei einem pH-Wert der Kuppelsuspension von 3,5 bis 5,3 und Temperaturen zwischen 30 und 70°C kuppelkt und das so erhaltene Rohprodukt direkt, nach Zwischenisolierung oder nach Zwischenisolierung und Trocknung, in organischen Lösemitteln oder Gemischen organischer Lösemittel mit Wasser auf 80 bis 180°C erhitzt.

8. Verfahren zur Herstellung der orangefarbigen Kristallmodifikation nach Anspruch 3 aus der gelben Kristallmodifikation nach Anspruch 2, dadurch gekennzeichnet, dass man die gelbe Kristallmodifikation in organischen Lösemitteln oder Gemischen organischer Lösemittel mit Wasser auf 80 bis 180°C erhitzt.

9. Verwendung der Verbindungen nach einem oder mehreren der Ansprüche 1 bis 3 als Pigmente.

10 Verwendung der Verbindungen nach einem oder mehreren der Ansprüche 1 bis 3 zur Pigmentierung von Lacken und plastischen Massen.

## Claims

1. An azo compound of the formula I

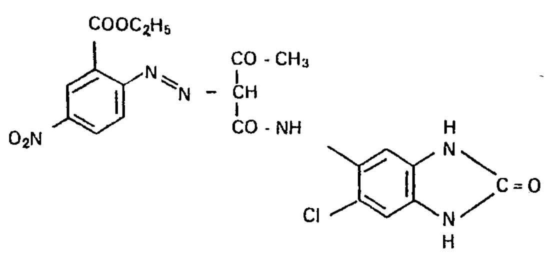

(I)

2. A yellow crystal modification of the compound according to claim 1, characterized in that the X-ray diffraction diagram obtained with CuK$\alpha$ radiation of which has a high intensity reflection at a Bragg angle of 5.20° $\vartheta$, medium intensity reflections at Bragg angles of 6.45°, 7.80°, 8.40°, 8.90°, 10.45°, 12.70° and 13.35° $\vartheta$ and low intensity reflections at Bragg angles of 4.20°, 8.10°, 11.45°, 12.00°, 13.60° and 14.40° $\vartheta$.

3. An orange-colored crystal modification of the compound according to claim 1, characterized in that the X-ray diffraction diagram obtained with of Cu-K$\alpha$ radiation of which has high intensity reflections at Bragg angles of 5.05° and 12.95° $\vartheta$, medium intensity reflections at Bragg angles of 3.55°, 5.60°, 8.00°, 10.05°, 10.40°, 11.35° and 14.20° $\vartheta$ and low intensity reflections at Bragg angles of 2.55°, 9.10°, 11.95°, 13.65 and 16.10° $\vartheta$.

4. A process for the preparation of the azo compound according to claim 1, characterized in that a compound of the formula II

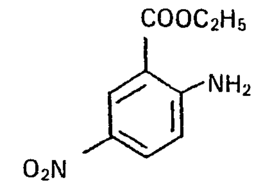

(II)

is diazotized and the resulting diazonium compound is coupled with a compound of the formula III

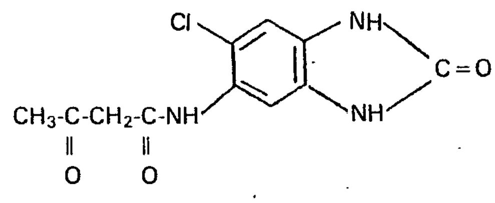

(III)

5. A process for the preparation of the yellow crystal modification according to claim 2 by azo coupling according to claim 4, characterized in that the coupling is carried out at a pH value of the coupling suspension of 5.5 to 7.0 and at temperatures between 20 and 50°C, and intermediately isolating the crude product and heating it with the addition of an alcohol having 1 to 6 C-Atoms or of its mixture with water to 65 to 130°C.

6. A process for the preparation of the yellow crystal modification according to claim 2 by azo coupling according to claim 4, characterized in that the coupling is carried out at a pH value of the coupling suspension of 3.5 to 7.0 and at temperatures between 25 and 70°C in the presence of a product from the condensation of an aliphatic alcohol having 8 to 24 C atoms with 2 to 20 moles of ethylene oxide or of a tertiary ester formed from o-phosphoric acid and an alcohol $R-[O-CH_2-Ch_2-]_n-OH$, in which R denotes an aliphatic hydrocarbon radical having 8 to 24 C atoms and n denotes a number between 1 and 20, and heating the resulting crude product, direct or after an intermediate isolation, in water or in a mixture of water and an alcohol having 1 to 6 C-Atoms at 65 to 140°C.

7. A process for the preparation of the orange-colored crystal modification according to claim 3 by azo coupling according to claim 4, characterized in that coupling is carried out at a pH value of the coupling suspension of 3.5 to 5.3 and at temperatures between 30 and 70°C and heating the resulting crude product direct, after an intermediate isolation or after an intermediate isolation and drying, in an organic solvent or in a mixture of an organic solvent with water at 80 to 180°C.

8. A process for the preparation of the orange-colored crystal modification according to claim 3, obtained from the yellow crystal modification according to claim 2, characterized in that the yellow crystal modification is heated in an organic solvent or a mixture of an organic solvent with with water at 80 to 180°C.

9. Use of the compounds according one or more of the claims 1 to 3 as pigments.

10. Use of the compounds according to one or more of the claims 1 to 3 for pigmentation of lacquers and plastic compositions.

## Revendications

1. Composé azoïque répondant à la formule I

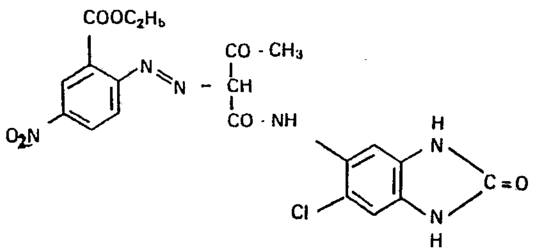

(I)

2. Variété cristalline jaune du composé suivant la revendication 1, caractérisée en ce que son diagramme de diffraction des rayons X au moyen de rayon Kα du Cu présente, pour un angle d'incidence de 5,20° ϑ, une réflexion de forte intensité, pour des angles d'incidence de 6,45°, 7,80°, 8,40°, 8,90°, 10,45°, 12,70° et 13,35° ϑ, des réflexions d'intensité moyenne, et pour des angles d'incidence de 4,20°, 8,10°, 11,45°, 12,00°, 13,60° et 14,40 ϑ, des réflexions de faible intensité.

3. Variété cristalline orangée du composé suivant la revendication 1, caractérisée en ce que son diagramme de diffraction des rayons X au moyen de rayons Kα du Cu présente, pour des angles d'incidence de 5,05° et 12,95° ϑ, des réflexions de forte intensité, pour des angles d'incidence de 3,55°, 5,60°, 8,00°, 10,05°, 10,40°, 11,35° et 14,20° ϑ, des réflexions d'intensité moyenne, et pour des angles d'incidence de 2,55°, 9,10°, 11,95°, 13,65° et 16,10° ϑ des réflexions de faible intensité.

4. Procédé de préparation du composé azoïque suivant la revendication 1, caractérisé en ce qu'on diazote le composé répondant à la formule II.

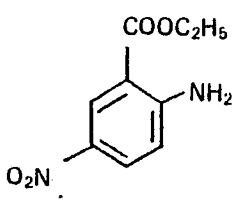

(II)

et on couple le composé diazonium obtenu avec le composé répondant à la formule III

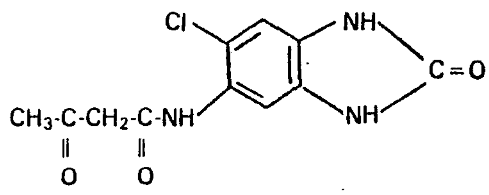

(III)

5. Procédé de préparation de la variété cristalline jaune suivant la revendication 2 par copulation azoïque suivant la revendication 4, caractérisé en ce qu'on effectue la copulation à un pH de la suspension de copulation de 5,5 à 7,0 et à des températures entre 20 et 50°C, on isole intermédiairement le produit brut et on le chauffe à 65 à 130°C avec addition d'alcools en $C_1$ à $C_6$ ou de mélanges de ceux-ci avec de l'eau.

6. Procédé de préparation de la variété cristalline jaune suivant la revendication 2 par copulation azoïque suivant la revendication 4, caractérisé en ce qu'on effectue la copulation à un pH de la suspension de copulation de 3,5 à 7,0 et à des températures entre 25 et 70°C en présence d'un produit de condensation d'un alcool aliphatique en $C_8$ à $C_{24}$ avec 2 à 20 moles d'oxyde d'éthylène ou d'un ester tertiaire de l'acide O-phosphorique et d'un alcool $R\text{-}[O\text{-}CH_2\text{-}CH_2]_n\text{-}OH$, R désignant un radical hydrocarboné aliphatique en $C_8$ à $C_{24}$ et n un nombre entre 1 et 20, et on chauffe à 65 à 140°C le produit brut obtenu, directement ou après isolement intermédiaire, dans de l'eau ou des mélanges d'eau et d'alcools en $C_1$ à $C_6$.

7. Procédé de préparation de la variété cristalline orangée selon la revendication 3 par copulation azoïque suivant la revendication 4, caractérisé en ce qu'on copule à un pH de la suspension de copulation de 3,5 à 5,3 et à des températures de 30 à 70°C et on chauffe le produit brut ainsi obtenu à 80 à 180°C, directement après isolement intermédiaire ou après isolement intermédiaire et séchage dans des solvants organique ou des mélanges de solvants organiques avec de l'eau.

8. Procédé de préparation de la variété cristalline orangée selon la revendication 3 à partir de la variété cristalline jaune suivant la revendication 2, caractérisé en ce qu'on chauffe la variété cristalline jaune à 80 à 180°C dans des solvants organiques ou des mélanges de solvants organiques avec de l'eau.

9. Utilisation des composés suivant une ou plusieurs des revendications 1 à 3 comme pigments.

10. Utilisation des composés suivant une ou plusieurs des revendications 1 à 3 pour la pigmentation de laques et de masses plastiques.